# EUROPEAN PATENT SPECIFICATION

(11) **EP 3 028 125 B1**
(45) Date of publication and mention of the grant of the patent: **05.04.2023**
(21) Application number: 14832247.2
(22) Date of filing: 01.08.2014
(51) Int. Cl.: G06F 3/041, G06F 3/043

(54) **CAPTURE OF VIBRO-ACOUSTIC DATA USED TO DETERMINE TOUCH TYPES**
ERFASSUNG VIBROAKUSTISCHER DATEN ZUM ERMITTELN VON BERÜHRUNGSARTEN
CAPTURE DE DONNÉES VIBRO-ACOUSTIQUES UTILISÉES POUR DÉTERMINER DES TYPES DE GESTES TACTILES

(30) Priority: 02.08.2013 US 201313958427
(43) Date of publication of application: 08.06.2016
(73) Proprietor: Qeexo, Co., San Jose, CA 95134 (US)
(72) Inventor: HARRISON, Christopher, San Jose, CA 95134 (US); XIAO, Robert, Bo, San Jose, CA 95134 (US); SCHWARZ, Julia, San Jose, CA 95134 (US)
(74) Representative: AWA Denmark A/S
(86) International application number: PCT/US2014/049485
(87) International publication number: WO 2015/017831

(56) References cited:
- EP-A2- 2 280 337
- WO-A1-2013/059488
- WO-A1-2013/061998
- US-A1- 2003 217 873
- US-A1- 2011 133 934
- US-A1- 2011 175 832
- US-A1- 2012 200 517
- US-A1- 2012 262 407
- PEDRO LOPES ET AL: "Augmenting touch interaction through acoustic sensing", PROCEEDINGS OF THE ACM INTERNATIONAL CONFERENCE ON INTERACTIVE TABLETOPS AND SURFACES, ITS '11, 13 November 2011 (2011-11-13), pages 53-56, XP055177712, New York, New York, USA DOI: 10.1145/2076354.2076364 ISBN: 978-1-45-030871-7

## Description

### BACKGROUND OF THE INVENTION

### 1. Field of the Invention

This invention relates generally to interacting with electronic devices via a touch-sensitive surface.

### 2. Description of the Related Art

Many touch pads and touch screens today are able to support a small set of gestures. For example, one finger is typically used to manipulate a cursor or to scroll the display. Another example is using two fingers in a pinching manner to zoom in and out of content, such as a photograph or map. However, this is a gross simplification of what fingers and hands are capable of doing. Fingers are diverse appendages, both in their motor capabilities and their anatomical composition. Furthermore, fingers and hands can also be used to manipulate tools, in addition to making gestures themselves.
EP 2 280 337 A2 describes a method for sensing a type of action used to operate a touch panel in which an input position detection unit detects the position at which an operation object is in contact with the touch panel. The input position detection unit transmits, as input position information, the coordinate value related to the contacting position to a moving direction detection unit. The input position detection unit notifies an acoustic information acquisition unit that operation is performed using the operation object. A Fourier transformation unit receives acoustic information from a vibration sensor activated by the acoustic information acquisition unit, Fourier transforms and transmits the acoustic information in the frequency domain to an operation object type identification unit. The operation object type identification unit subsequently references the acoustic information in the frequency domain transmitted from the Fourier transformation unit, and identifies the type of the operation object based on the volume and the peak frequency. The acoustic information acquisition unit and thus also the vibration sensor is not activated until after the operation object has been in contact with the touch panel. The type of the operation object is identified based on the volume and the peak frequency.
The article "Augmenting Touch Interaction Through Acoustic Sensing" by Pedro Lopes et al., Conference ITS '11, November 13-16, Kobe, Japan, describes a method for detection of touch types by means of electro acoustic sensing in which the touch type is identified based solely on electro acoustic data. Pedro Lopes et al. mention the use of touch data (location) for one sole purpose, namely for removing false positives from the touch events registered.
US 2003/0217873 A1 describes systems and methods for localizing and characterizing surface impacts based on measuring and correlating recordings from several locations on the surface of impact of an acoustic signal produced by the impact and is concerned with the removal of external acoustic signals from the relevant impact produced acoustic signals.

WO 2013/061998 A1 discloses a method of interaction between a user and an electronic device according to the preamble of the appended independent claim 1.

Thus, there is a need for better utilization of the capabilities of fingers and hands to control interactions with electronic devices.

### SUMMARY OF THE INVENTION

The present invention allows users to interact with touch-sensitive surfaces in a manner that distinguishes different touch types. For example, the same touch events performed by a finger pad, a finger nail, a knuckle or different types of instruments may result in the execution of different actions on the electronic device.

The invention is defined by the subject matter of the independent claims. Particular embodiments of the invention are set out in the dependent claims. In one approach, a user uses his finger(s) or an instrument to interact with an electronic device via a touch-sensitive surface, such as a touch pad or a touch screen. A touch event trigger indicates an occurrence of a touch event between the user and the touch- sensitive surface. Touch data and vibro-acoustic data produced by the physical touch event are used to determine the touch type for the touch event. However, the touch event trigger may take some time to generate due to, for example, sensing latency and filtering. Further, the event trigger may take some time to propagate in the device due to, for example, software processing, hysteresis, and overhead from processing a low level event (e.g., interrupt) up through the operating system to end user applications. Because there will always be some amount of latency, the vibro-acoustic data from the touch impact will always have occurred prior to receipt of the touch event trigger.

On most mobile electronic devices, the distinguishing components of the vibro-acoustic signal (i.e., those which are most useful for classification) occur in the first 10 ms of a touch impact. For current mobile electronics, the touch event trigger is typically received on the order of tens of milliseconds after the physical touch contact. Therefore, if vibro- acoustic data is captured only upon receipt of a touch event trigger, the most important part of the vibro-acoustic signal will have already occurred and will be lost (i.e., never captured). This precludes reliable touch type classification for many platforms.

In embodiments of the claimed invention, the occurrence of the touch event is predicted beforehand. For example, the touch-sensitive surface may sense proximity of a finger before actual contact (e.g., using hover sensing capabilities of capacitive screens, diffuse illumination optical screens, and other technologies). This prediction is then used to trigger capture of vibro-acoustic data and buffering. If the predicted touch event does not occur, capturing and/or buffering can cease, waiting for another predicted touch.

In another aspect, the touch type for the touch event determines subsequent actions. An action is taken on the electronic device in response to the touch event and to the touch type. That is, the same touch event can result in the execution of one action for one touch type and a different action for a different touch type.

Other aspects of the invention include methods, devices and tangible storage media related to the approaches described above.

### BRIEF DESCRIPTION OF THE DRAWINGS

The invention has other advantages and features which will be more readily apparent from the following detailed description of the invention and the appended claims, when taken in conjunction with the accompanying drawings, in which:
FIG. 1 is a block diagram of an electronic device according to the present invention.
FIG. 2A is timing diagrams illustrating a delayed touch event trigger.
FIGS. 2B-2C are timing diagrams illustrating appropriate windows for vibro- acoustic data.
FIGS. 3A-3B are a block diagram and timing diagram of one implementation for accessing earlier vibro -acoustic data.
FIGS. 4A-4B are a block diagram and timing diagram of another implementation for accessing earlier vibro-acoustic data.
FIG. 5 is a flow diagram illustrating touch event analysis using the device of FIG. 1.
FIG. 6 is a spectrogram of three types of touches.

The figures depict embodiments of the present invention and further examples useful for the understanding of the present invention for purposes of illustration only. One skilled in the art will readily recognize from the following discussion that alternative embodiments of the structures and methods illustrated herein may be employed.

### DETAILED DESCRIPTION OF THE PREFERRED EMBODIMENTS

The figures and the following description relate to preferred embodiments and further examples useful for the understanding of the present invention by way of illustration only. It should be noted that from the following discussion, alternative embodiments of the structures and methods disclosed herein will be readily recognized as viable alternatives that may be employed without departing from the invention as claimed.

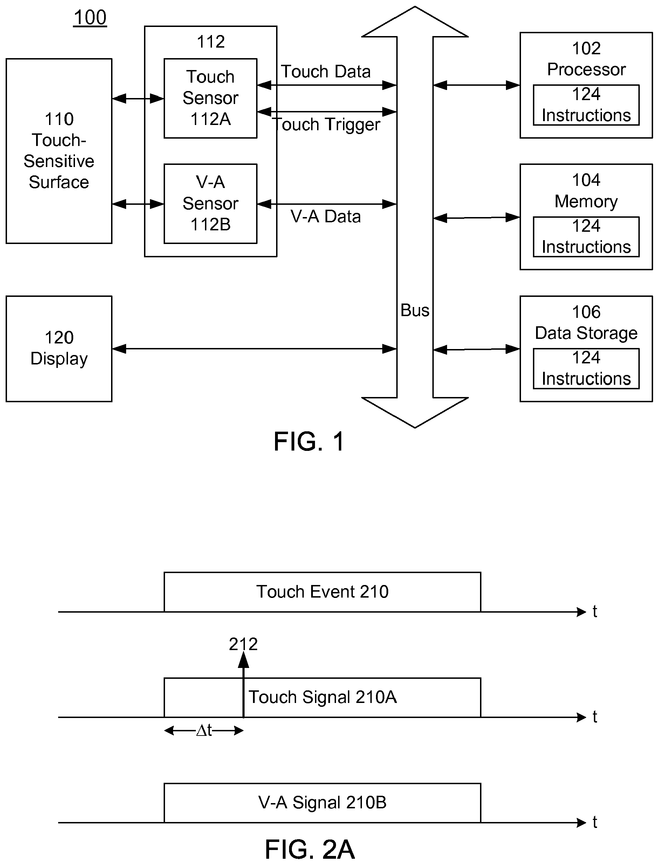

FIG. 1 is a block diagram of an electronic device 100 according to the present invention. The device 100 includes a touch-sensitive surface 110, for example a touch pad or touch screen. It also includes computing resources, such as processor 102, memory 104 and data storage 106 (e.g., an optical drive, a magnetic media hard drive or a solid state drive). Sensor circuitry 112 provides an interface between the touch-sensitive surface 110 and the rest of the device 100. Instructions 124 (e.g., software), when executed by the processor 102, cause the device to perform certain functions. In this example, instructions 124 include a touch analysis module that analyzes the user interactions with the touch-sensitive surface 110. The instructions 124 also allow the processor 102 to control a display 120 and to perform other actions on the electronic device.

In a common architecture, the data storage 106 includes a machine-readable medium which stores the main body of instructions 124 (e.g., software). The instructions 124 may also reside, completely or at least partially, within the memory 104 or within the processor 102 (e.g., within a processor's cache memory) during execution. The memory 104 and the processor 102 also constitute machine-readable media.

In this example, the different components communicate using a common bus, although other communication mechanisms could be used. As one example, the processor 102 could act as a hub with direct access or control over each of the other components.

The device 100 may be a server computer, a client computer, a personal computer (PC), or any device capable of executing instructions 124 (sequential or otherwise) that specify actions to be taken by that device. Further, while only a single device is illustrated, the term "device" shall also be taken to include any collection of devices that individually or jointly execute instructions 124 to perform any one or more of the methodologies discussed herein. The same is true for each of the individual components. For example, the processor 102 may be a multicore processor, or multiple processors working in a coordinated fashion. It may also be or include a central processing unit (CPU), a graphics processing unit (GPU), a network processing unit (NPU), a digital signal processor (DSP), one or more application specific integrated circuits (ASICs), or combinations of the foregoing. The memory 104 and data storage 106 may be dedicated to individual processors, shared by many processors, or a single processor may be served by many memories and data storage.

As one example, the device 100 could be a self-contained mobile device, such as a cell phone or tablet computer with a touch screen. In that case, the touch screen serves as both the touch-sensitive surface 110 and the display 120. As another example, the device 100 could be implemented in a distributed fashion over a network. The processor 102 could be part of a cloud-based offering (e.g., renting processor time from a cloud offering), the data storage 106 could be network attached storage or other distributed or shared data storage, and the memory 104 could similarly be distributed or shared. The touch-sensitive surface 110 and display 120 could be user I/O devices to allow the user to interact with the different networked components.

Returning to FIG. 1, the sensor circuitry 112 includes two parts: touch sensor 112A and vibro-acoustic sensor 112B. The touch sensor 112A senses the touch contact caused by the user with the touch-sensitive surface. For example, the touch-sensitive surface may be based on capacitive, optical, resistive, electric field, acoustic or other technologies that form the underlying basis for the touch sensing. The touch sensor 112A includes the components that sense the selected phenomenon.

Touch events also physically cause vibrations or acoustic signals. Touching the surface may cause acoustic signals (such as the sound of a fingernail or finger pad contacting glass) and/or may cause vibrations in the underlying structure of an electronic device, e.g., chassis, enclosure, electronics boards (e.g., PCBs). The sensor circuitry 1 12 includes sensors 112B to detect the vibro-acoustic signal. The vibro-acoustic sensors may be arranged at a rear side of the touch-sensitive surface so that the vibro-acoustic signal caused by the physical touch event can be captured. They could also be mounted in any number of locations inside the device, including by not limited to the chassis, touch screen, main board, printed circuit board, display panel, and enclosure. Examples of vibro-acoustic sensors include impact sensors, vibration sensors, accelerometers, strain gauges, and acoustic sensors such as a condenser microphone, a piezoelectric microphone, MEMS microphone and the like. Additional sensor types include piezo bender elements, piezo film, accelerometers (e.g., linear variable differential transformer (LVDT), potentiometric, variable reluctance, piezoelectric, piezoresistive, capacitive, servo (force balance), MEMS), displacement sensors, velocity sensors, vibration sensors, gyroscopes, proximity sensors, electric microphones, hydrophones, condenser microphones, electret condenser microphones, dynamic microphones, ribbon microphones, carbon microphones, piezoelectric microphones, fiber optic microphones, laser microphones, liquid microphones, and MEMS microphones. Many touch screen computing devices today already have microphones and accelerometers built in (e.g., for voice and input sensing). These can be utilized without the need for additional sensors, or can work in concert with specialized sensors.

Whatever the underlying principle of operation, touches on the touch-sensitive surface will result in signals - both touch signals and vibro-acoustic signals. However, these raw signals typically are not directly useable in a digital computing environment. For example, the signals may be analog in nature. The sensor circuitry 112A-B typically provides an intermediate stage to process and/or condition these signals so that they are suitable for use in a digital computing environment. As shown in FIG. 1, the touch sensor circuitry 112A produces touch data for subsequent processing and the vibro-acoustic sensor circuitry 112B produces vibro-acoustic data for subsequent processing.

The touch sensor circuitry 112A also produces a touch event trigger, which indicates the occurrence of a touch event. Touch event triggers could appear in different forms. For example, the touch event trigger might be an interrupt from a processor controlling the touch sensing system. Alternately, the touch event trigger could be a change in a polled status of the touchscreen controller. It could also be implemented as a modification of a device file (e.g., dev/input/event6") on the file system, or as a message posted to a driver work queue. As a final example, the touch event trigger could be implemented as an onTouchDown() event in a graphical user interface program.

However, the generation and receipt of the touch event trigger may be delayed due to latency in touch sensor circuitry 112 A. Thus, if vibro-acoustic sensor circuitry 112B were to wait until it received the touch event trigger and then turn on, it may miss the beginning portion of the vibro-acoustic data.

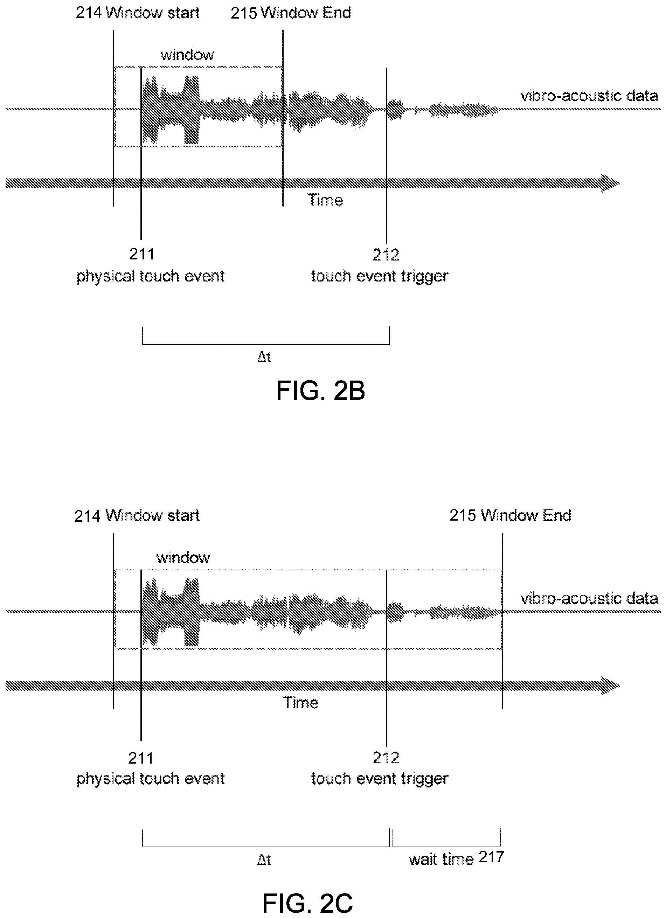

FIG. 2A illustrates this situation. Signal 210 shows the time duration of the touch event. Signal 210A shows the corresponding touch signal and signal 210B shows the corresponding vibro-acoustic signal. The touch sensor circuitry 112A (and possibly also instructions 124) processes the touch signal 210A to produce the touch event trigger 212. This processing requires some amount of time, labeled as Δt in FIG. 2. If capture of the vibro-acoustic signal begins at that time, the vibro-acoustic signal prior to that time will have been lost.

In many cases, the delay Δt can be very significant. It could be longer than the entire signal window. For example, typical delays Δt for current devices are 20ms, 35ms, 50ms, or possibly longer; while the desired vibro-acoustic signal window 210B can be the first 5ms, for example. In these cases, waiting for the touch event trigger 212 may miss the entire vibro-acoustic signal. Other times, the delay Δt can be short and the window long, for example, a 10ms delay with a 100ms window.

FIGS. 2B-2C are timing diagrams illustrating some examples of appropriate windows for vibro-acoustic data. In FIG. 2B, the physical touch event begins at time 211 and there is a delay Δt before the touch event trigger 212 is ready. The signal shown in FIG. 2B is the vibro-acoustic data 210B, which also starts at time 211. The desired time window for the vibro-acoustic data 210B begins at time 214 and ends at time 215. Note that the window begins 214 slightly before the physical touch event begins 211, and ends 215 before both the touch event trigger 212 and the end of the vibro-acoustic data. That is, not all of the vibro-acoustic data is used.

In some cases, useful vibro acoustic data can persist after the receipt of the touch event trigger 212. In this case, a small waiting period can be used before accessing the vibro-acoustic buffer, which can contain periods both before and after the touch event trigger. This is shown in FIG. 2C. In this example, the desired window extends beyond the touch event trigger 212. If the buffer were accessed at the time of the touch event trigger 212, the last portion of the window would be missed. Instead, the device waits for time period 217 and then accesses the buffer.

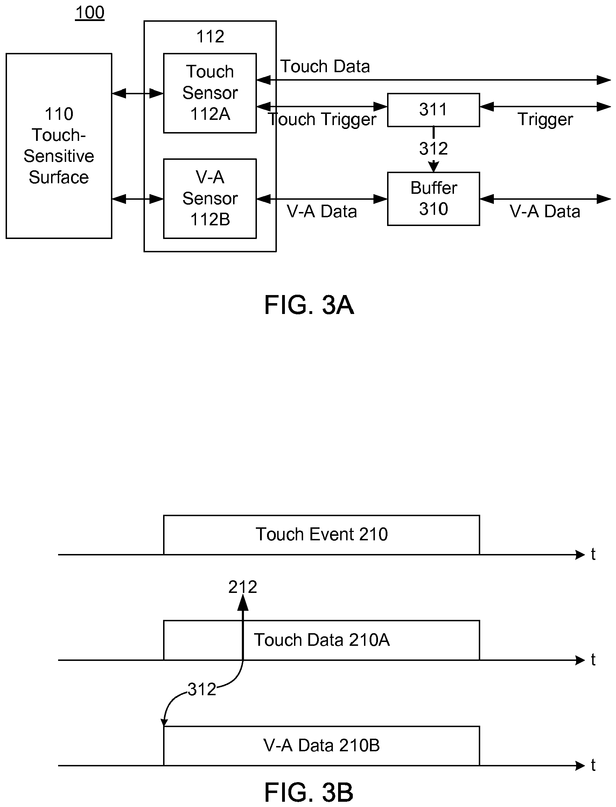

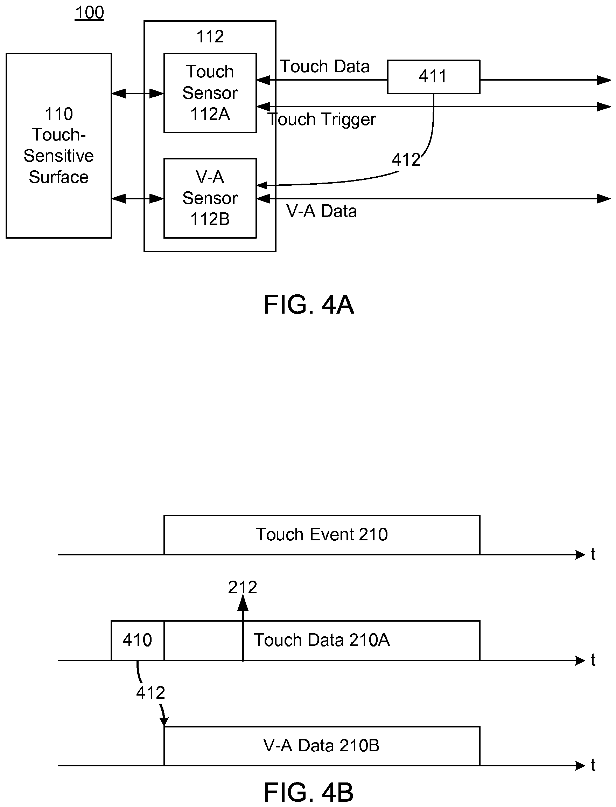

FIGS. 3 and 4 are block diagrams illustrating two different ways to access vibro-acoustic data for times prior to receipt of the touch event trigger. In FIG. 3 A, the vibro-acoustic signal from the touch-sensitive surface is continuously captured and buffered. Buffer 310 contains a certain sample window of vibro-acoustic data, including data captured prior to the current time. The touch event trigger 212 and possibly also touch data are used by module 311 to determine the relevant time window 210B. In one approach, the length of the time window is predetermined. For example, it may be known that the latency for the touch event trigger is between 20 and 40ms, so the system may be designed assuming a worst case latency (40ms) but with sufficient buffer size and window size to accommodate shorter latencies (20ms). On some systems, the latency is very consistent, e.g., always 30ms. In that case, the time windows and buffer sizes can be more tightly designed.

The vibro-acoustic data for this time window are then accessed from buffer 310. In other words, the approach of FIG. 3 still uses the delayed trigger 212, but the buffer 310 allows the device to effectively reach back in time to access the vibro-acoustic data from the beginning of the time window 210. This is indicated by the arrows 312 in FIGS. 3A-B, which indicate moving back in time relative to the touch event trigger 212.

In FIG. 4A, a faster trigger is used. In one approach, the touch event is predicted prior to its occurrence. For example, the touch data may be predictive or the touch- sensitive surface may be capable of detecting proximity before actual contact, as indicated by window 410 in FIG. 4B. That is, according to the present invention, the touch-event surface is able to sense a finger or instrument approaching the touch-sensitive surface. From this data, module 411 predicts when actual contact will occur, as indicated by arrows 412 in FIGS. 4A-B. This begins capture and buffering of the vibro-acoustic signal. In this way, the vibro-acoustic data of the touch impact can be captured.

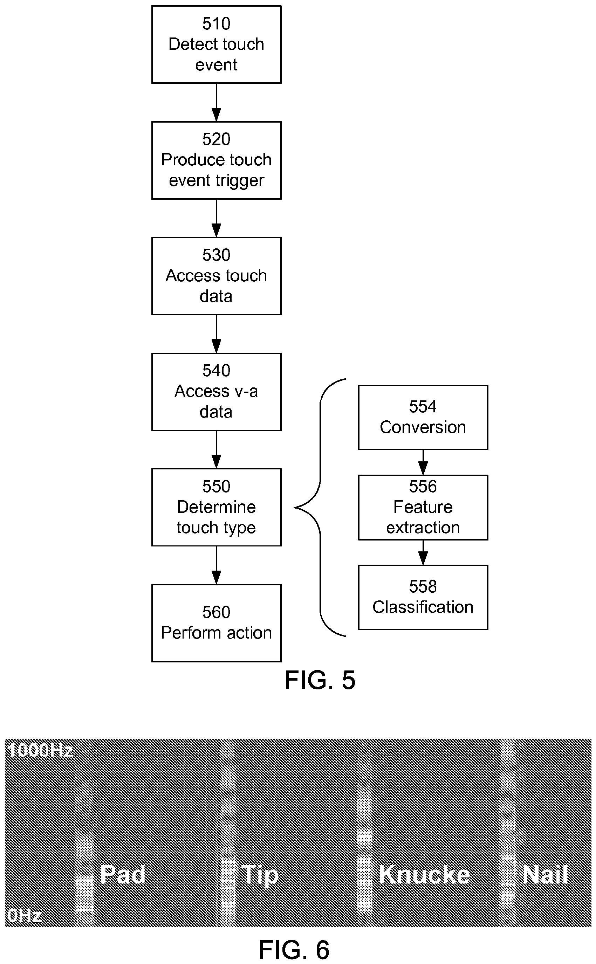

FIG. 5 is a flow diagram illustrating a touch event using device 100. The user uses his finger(s) or other instruments to interact with the touch-sensitive surface 110. For example, he may use his finger to touch an element displayed on the device, or to touch-and- drag an element, or to touch-and-drag his finger over a certain region. These interactions are meant to instruct the electronic device to perform corresponding actions. The touch-sensitive surface 110 and sensor circuitry 112 detect 510 the occurrence of the touch event and produce 520 a touch event trigger. The device accesses 530 touch data produced by the touch event and also accesses 540 vibro-acoustic data produced by the touch event. Due to the delay in producing the touch event trigger, the time window for the vibro-acoustic data includes times that are prior to receipt of the touch event trigger 520. The touch data and vibro-acoustic data are used to determine 550 a touch type for the touch event.

Touch types can be defined according to different criteria. For example, different touch types can be defined depending on the number of contacts. A "uni-touch" occurs when the touch event is defined by interaction with a single portion of a single finger (or instrument), although the interaction could occur over time. Examples of uni-touch include a simple touch (e.g., a single tap), touch-and-drag, and double-touch (e.g., a double- tap - two taps in quick succession). In multi-touch, the touch event is defined by combinations of different fingers or finger parts. For example, a touch event where two fingers are simultaneously touching is a multi-touch. Another example would be when different parts of the same finger are used, either simultaneously or over time.

Touch types can also be classified according to which part of the finger or instrument touches. For example, touch by the finger pad, finger nail or knuckle could be considered different touch types. The finger pad is the fleshy part around the tip of the finger. It includes both the fleshy tip and the fleshy region from the tip to the first joint. The knuckle refers to any of the finger joints. The term "finger" is also meant to include the thumb. It should be understood that the finger itself is not required to be used for touching; similar touches may be produced in other ways. For example, the "finger pad" touch type is really a class of touch events that have similar characteristics as those produced by a finger pad touching the touch-sensitive surface, but the actual touching object may be a man-made instrument or a gloved hand or covered finger, so long as the touching characteristics are similar enough to a finger pad so as to fall within the class.

The touch type is determined in part by a classification of vibro-acoustic signals from the touch event. When an object strikes a certain material, vibro-acoustic waves propagate outward through the material or along the surface of the material. Typically, touch-sensitive surface 110 uses rigid materials, such as plastic or glass, which both quickly distribute and faithfully preserve the signal. As such, when respective finger parts touch or contact the surface of the touch-sensitive surface 110, vibro-acoustic responses are produced. The vibro-acoustic characteristics of the respective finger parts are unique, mirroring their unique anatomical compositions.

For example, FIG. 6 illustrates an example vibro-acoustic spectrogram of three types of finger touches. As shown in FIG. 6, the finger pad, knuckle, and finger nail produce different vibro-acoustic responses. Tapping on different materials, with different fingers/finger parts, with different microphones, in different circumstances can result in different spectrograms. Once the vibro-acoustic signal has been captured, a vibro-acoustic classifier (mostly implemented as part of instructions 124 in FIG. 1) processes the vibro-acoustic signal to determine the touch type.

FIG. 5 also shows a block diagram of an example touch analysis module 550. It includes conversion 554, feature extraction 556, and classification 558. The conversion module 554 performs a frequency domain transform (e.g., a Fourier transform or method) on the sampled time-dependent vibro-acoustic signal in the buffer. For example, the Fourier transform of this window may produce 2048 bands of frequency power. The conversion module 554 may also perform other functions. These could include filtering the waveform (e.g., Kalman filter, exponential moving average, 2kHz high pass filter, One Euro filter, Savitzky-Golay filter). It could also include transformation into other representations (e.g., wavelet transform, derivative), including frequency domain representations (e.g., spectral plot, periodogram, method of averaged periodograms, Fourier transform, least-squares spectral analysis, Welch's method, discrete cosine transform (DCT), fast folding algorithm).

The feature extraction module 556 then generates various features. These features can include time domain and/or frequency domain representations of the vibro- acoustic signal (or its filtered versions), as well as first, second, and higher order derivatives thereof. These features can also include down-sampling the time and frequency domain data into additional vectors (e.g., buckets of ten), providing different aliasing. Additional features can be further derived from the time domain and/or frequency domain representations and their derivatives, including average, standard deviation, standard deviation (normalized by overall amplitude), range, variance, skewness, kurtosis, sum, absolute sum, root mean square (rms), crest factor, dispersion, entropy, power sum, center of mass (centroid), coefficient of variation, cross correlation (e.g., sliding dot product), zero-crossings, seasonality (i.e., cyclic variation), and DC bias. Additional features based on frequency domain representations and their derivatives include power in different bands of the frequency domain representation (e.g., power in linear bins or octaves) and ratios of the power in different bands (e.g., ratio of power in octave 1 to power in octave 4).

Features could also include template match scores for a set of known exemplar signals using any of the following methods: convolution, inverse filter matching technique, sum-squared difference (SSD), dynamic time warping, and elastic matching.

Spectral centroid, spectral density, spherical harmonics, total average spectral energy, spectral rolloff, spectral flatness, band energy ratio (e.g., for every octave), and log spectral band ratios (e.g., for every pair of octaves, and every pair of thirds) are features that can be derived from frequency domain representations.

Additional vibro-acoustic features include linear prediction-based cepstral coefficients (LPCC), perceptual linear prediction (PLP) cepstral coefficients, cepstrum coefficients, mel-frequency cepstral coefficients (MFCC), and frequency phases (e.g., as generated by an FFT). The above features can be computed on the entire window of vibro- acoustic data, but could also be computed for sub regions (e.g., around the peak of the waveform, at the end of the waveform). Further, the above vibro-acoustic features can be combined to form hybrid features, for example a ratio (e.g., zero-crossings / spectral centroid) or difference (zero-crossings - spectral centroid).

The feature extraction module 556 can also generate features from the touch data. Examples include location of the touch (2D, or 3D in the case of curved glass or other nonplanar geometry), size and shape of the touch (some touch technologies provide an ellipse of the touch with major and minor axes, eccentricity, and/or ratio of major and minor axes), orientation of the touch, surface area of the touch (e.g., in squared mm or pixels), number of touches, pressure of the touch (available on some touch systems), and shear of the touch. "Shear stress," also called "tangential force," arises from a force vector perpendicular to the surface normal of a touch screen, i.e., parallel to the touch screen surface. This is similar to normal stress - what is commonly called pressure - which arises from a force vector parallel to the surface normal. Some features depend on the type of touch-sensitive surface. For example, capacitance of touch, swept frequency capacitance of touch, and swept frequency impedance of touch may be available for (swept frequency) capacitive touch screens. Derivatives of the above quantities can also be computed as features. The derivatives may be computed over a short period of time, for example, touch velocity and pressure velocity. Another possible feature is an image of the hand pose (as imaged by e.g., an optical sensor, diffuse illuminated surface with camera, near-range capacitive sensing).

The classification module 558 classifies the touch using extracted features from the vibro-acoustic signal as well as possibly other non-vibro-acoustic features, including touch features. In one exemplary embodiment, the classification module 558 is implemented with a support vector machine (SVM) for feature classification. The SVM is a supervised learning model with associated learning algorithms that analyze data and recognize patterns, used for classification and regression analysis. To aid classification, the user can provide supplemental training samples to the vibro-acoustic classifier. Other techniques appropriate for the classification module 558 include basic heuristics, decision trees, random forest, naive Bayes, elastic matching, dynamic time warping, template matching, k-means clustering, K-nearest neighbors algorithm, neural network, multilayer perceptron, multinomial logistic regression, Gaussian mixture models, and AdaBoost.

Returning to FIG. 5, the device analyzes the touch event to determine 550 the touch type. Based on this analysis, the processor 102 then performs 560 the appropriate actions. The appropriate action depends on the touch event (e.g., touch, touch-and-drag, etc.) but it also depends on the touch type. The same touch event can result in different actions by processor 102, for different touch types. For example, a touch by the finger pad, a touch by the finger nail and a touch by an instrument may trigger three different actions.

This approach allows the same touch event to control more than one action. This can be desirable for various reasons. First, it increases the number of available actions for a given set of touch events. For example, if touch types are not distinguished, then a single tap can be used for only one purpose, because a single tap by a finger pad, a single tap by a finger nail and a single tap by an instrument cannot be distinguished. However, if all three of these touch types can be distinguished, then a single tap can be used for three different purposes, depending on the touch type.

Conversely, for a given number of actions, this approach can reduce the number of user inputs needed to reach that action. Continuing, the above example, if three actions are desired, by distinguishing touch types, the user will be able to initiate the action by a single motion - a single tap. If touch types are not distinguished, then more complex motions or a deeper interface decision tree may be required. For example, without different touch types, the user might be required to first make a single tap to bring up a menu of the three choices. He would then make a second touch to choose from the menu.

Although the detailed description contains many specifics, these should not be construed as limiting the scope of the invention but merely as illustrating different examples and aspects of the invention. It should be appreciated that the scope of the invention includes other embodiments not discussed in detail above. Various other modifications, changes and variations which will be apparent to those skilled in the art may be made in the arrangement, operation and details of the method and apparatus of the present invention disclosed herein without departing from the spirit and scope of the invention as defined in the appended claims. Therefore, the scope of the invention should be determined by the appended claims and their legal equivalents.

The term "module" is not meant to be limited to a specific physical form. Depending on the specific application, modules can be implemented as hardware, firmware, software, and/or combinations of these. Furthermore, different modules can share common components or even be implemented by the same components. There may or may not be a clear boundary between different modules.

Depending on the form of the modules, the "coupling" between modules may also take different forms. Dedicated circuitry can be coupled to each other by hardwiring or by accessing a common register or memory location, for example. Software "coupling" can occur by any number of ways to pass information between software components (or between software and hardware, if that is the case). The term "coupling" is meant to include all of these and is not meant to be limited to a hardwired permanent connection between two components. In addition, there may be intervening elements. For example, when two elements are described as being coupled to each other, this does not imply that the elements are directly coupled to each other nor does it preclude the use of other elements between the two.

## Claims

1. A method of interaction between a user and an electronic device (100) having a touch-sensitive surface (110) that is capable of detecting proximity before actual contact, touch sensor circuitry (112A) and vibro-acoustic sensor circuitry (112B), where the method comprises:
receiving a touch event trigger (212) produced by the touch sensor circuitry (112A), which touch event trigger (212) indicates an occurrence of a physical touch event on the touch-sensitive surface (110);
accessing touch data produced in the touch sensor circuitry (112A) by the physical touch event;
accessing vibro-acoustic data for a vibro-acoustic signal produced in the vibro-acoustic sensor circuitry (112B) by the physical touch event, for a time window that begins at a time that is prior to receipt of the touch event trigger (212); and
determining a touch type for the physical touch event based on the touch data and vibro-acoustic data,
**characterized in that** the step of accessing vibro-acoustic data for a time window comprises:
predicting a possible physical touch prior to occurrence of the physical touch, based on data from touch sensor circuitry (112A) associated with the touch-sensitive surface (110), wherein said touch data is indicative of a finger or instrument approaching the touch-sensitive surface (110); and
using such a prediction to begin capture of vibro-acoustic data associated with the touch-sensitive surface (110), where the vibro-acoustic data is buffered by a buffer (310).

2. The method of claim 1 and further comprising predicting based on the proximity detected by the touch-sensitive surface (110) when actual contact will occur.

3. The method of claim 1 wherein a delay in receiving the touch event trigger (212) is at least one millisecond after the occurrence of the physical touch event.

4. The method of claim 1 wherein a wait is used such that the time window ends at a time that is after receipt of the touch event trigger (212).

5. The method of claim 1 wherein the vibro-acoustic data includes vibration data caused by the physical touch event.

6. The method of claim 1 wherein the vibro-acoustic data includes acoustic data caused by the physical touch event.

7. The method of claim 1 wherein the step of determining a touch type comprises:
extracting features from the touch data and vibro-acoustic data; and
classifying the features to determine a touch type for the physical touch event.

8. The method of claim 7 wherein the extracted features include at least one feature based on a location, shape, orientation, and/or size of the physical touch event.

9. The method of claim 7 wherein the extracted features include at least one feature based on a major axis value, minor axis value, eccentricity, and/or ratio of major and minor axes of the physical touch event.

10. The method of claim 7 wherein the extracted features include at least one feature based on a pressure of the physical touch event.

11. The method of claim 7 wherein the extracted features include at least one feature based on a capacitance of the physical touch event.

12. The method of claim 7 wherein the extracted features include at least one feature based on a time domain representation of the vibro-acoustic data or on a derivative of the time domain representation of the vibro-acoustic data.

13. The method of claim 7 wherein the extracted features include at least one feature based on a frequency domain representation of the vibro-acoustic data or on a derivative of a frequency domain representation of the vibro-acoustic data.

14. The method of claim 7 wherein the extracted features include at least one feature based on powers in different bands of a frequency domain representation of the vibro- acoustic data or of a derivative of a frequency domain representation of the vibro-acoustic data.

15. The method of claim 7 wherein the extracted features include at least one feature based on a ratio of powers in different bands of a frequency domain representation of the vibro-acoustic data or of a derivative of a frequency domain representation of the vibro- acoustic data.

16. The method of claim 7 wherein the extracted features include at least one feature based on a statistical value of the vibro-acoustic data.

17. The method of claim 7 wherein the extracted features include at least one feature based on at least one of the following for the vibro-acoustic data: skewness, dispersion, root mean square, zero crossing, power sum, range, average value, center of mass and standard deviation.

18. The method of claim 7 wherein the step of classifying the features comprises using a Support Vector Machine, Neural Network, Decision Tree, or Random Forest to classify the features.

19. The method of claim 1 further comprising:
executing an action on the electronic device (100) in response to the physical touch event and touch type, wherein the same physical touch event results in execution of a first action for a first touch type and results in execution of a second action for a second touch type.

20. The method of claim 1 wherein the touch-sensitive surface (110) is a touch screen.

21. A machine-readable tangible storage medium having stored thereon data representing sequences of instructions, which when executed by an electronic device (100) having a touch-sensitive surface (110) that is capable of detecting proximity before actual contact, touch sensor circuitry (112A) and vibro-acoustic sensor circuitry (112B), cause the electronic device (100) to perform a method comprising the steps of:
receiving a touch event trigger (212) produced by the touch sensor circuitry (112A), which touch event trigger (212) indicates an occurrence of a physical touch event on the touch-sensitive surface (110);
accessing touch data produced in the touch sensor circuitry (112A) by the physical touch event;
accessing vibro-acoustic data for a time window, the vibro-acoustic data physically produced in the vibro-acoustic sensor circuitry (112B) by the physical touch event, the time window beginning at a time that is prior to receipt of the touch event trigger (212); and
determining a touch type for the physical touch event based on the touch data and vibro-acoustic data,
**characterized in that**
the step of accessing vibro-acoustic data for a time window comprises:
predicting a possible physical touch, prior to occurrence of the physical touch, based on data from touch sensor circuitry (112A) associated with the touch-sensitive surface (110), wherein said touch data is indicative of an finger or instrument approaching the touch-sensitive surface (110); and
using such a prediction to begin capture of vibro-acoustic data associated with the touch-sensitive surface (110), where the vibro-acoustic data is buffered by a buffer (310).

22. An electronic device (100) comprising:
a touch-sensitive surface (110) that is capable of detecting proximity before actual contact, touch sensor circuitry (112A) and vibro-acoustic sensor circuitry (112B);
means for receiving a touch event trigger (212) produced by the touch sensor circuitry (112A), which touch event trigger (212) indicates an occurrence of a physical touch event on the touch-sensitive surface (110);
means for accessing touch data produced in the touch sensor circuitry (112A) by the physical touch event;
means for accessing vibro-acoustic data for a time window, the vibro-acoustic data physically produced in the vibro-acoustic sensor circuitry (112B) by the physical touch event, the time window beginning at a time that is prior to receipt of the touch event trigger (212); and
means for determining a touch type for the physical touch event based on the touch data and vibro-acoustic data,
**characterized in that**
the means for accessing vibro-acoustic data for a time window is configured to:
predict a possible physical touch, prior to occurrence of the physical touch, based on data from touch sensor circuitry (112A) associated with the touch-sensitive surface (110), wherein said touch data is indicative of a finger or instrument approaching the touch-sensitive surface (110); and
use such a prediction to begin capture of vibro-acoustic data associated with the touch-sensitive surface (110), where the vibro-acoustic data is buffered by a buffer (310).

## Patentansprüche

1. Verfahren zur Interaktion zwischen einem Benutzer und einer elektronischen Vorrichtung (100) mit einer berührungsempfindlichen Oberfläche (110), die Näherung vor dem tatsächlichen Kontakt detektieren kann, Berührungssensorschaltkreis(en) (112A) und vibroakustischen Sensorschaltkreis(en) (112B), wobei das Verfahren umfasst:
Empfangen eines Berührungsereignisauslösers (212), der durch die Berührungssensorschaltkreis(e) (112A) produziert wird, wobei der Berührungsereignisauslöser (212) ein Auftreten eines physischen Berührungsereignisses auf der berührungsempfindlichen Oberfläche (110) angibt;
Zugreifen auf Berührungsdaten, die in dem/den Berührungssensorschaltkreis(en) (112A) durch das physische Berührungsereignis produziert werden;
Zugreifen auf vibroakustische Daten für ein vibroakustisches Signal, die in dem/den vibroakustischen Sensorschaltkreis(en) (112B) durch das physische Berührungsereignis produziert werden, für ein Zeitfenster, das zu einer Zeit beginnt, die vor dem Empfang des Berührungsereignisauslösers (212) liegt; und
Bestimmen eines Berührungstyps für das physische Berührungsereignis basierend auf den Berührungsdaten und vibroakustischen Daten,
**dadurch gekennzeichnet, dass** der Schritt des Zugreifens auf vibroakustische Daten für ein Zeitfenster umfasst:
Prognostizieren einer möglichen physischen Berührung vor dem Auftreten der physischen Berührung basierend auf Daten von Berührungssensorschaltkreis(en) (112A) in Zusammenhang mit der berührungsempfindlichen Oberfläche (110), wobei die Berührungsdaten angeben, dass ein Finger oder Instrument sich der berührungsempfindlichen Oberfläche (110) nähert; und
Verwenden einer solchen Prognose, um mit dem Erfassen vibroakustischer Daten in Zusammenhang mit der berührungsempfindlichen Oberfläche (110) zu beginnen, wobei die vibroakustischen Daten durch einen Puffer (310) gepuffert werden.

2. Verfahren nach Anspruch 1, und des Weiteren umfassend Prognostizieren basierend auf der Näherung, die durch die berührungsempfindliche Oberfläche (110) detektiert wird, wann der tatsächliche Kontakt auftreten wird.

3. Verfahren nach Anspruch 1, wobei eine Verzögerung im Empfang des Berührungsereignisauslösers (212) mindestens eine Millisekunde nach dem Auftreten des physischen Berührungsereignisses beträgt.

4. Verfahren nach Anspruch 1, wobei eine Wartezeit verwendet wird, so dass das Zeitfenster zu der Zeit endet, die nach dem Empfang des Berührungsereignisauslösers (212) liegt.

5. Verfahren nach Anspruch 1, wobei die vibroakustischen Daten Vibrationsdaten einschließen, die durch das physische Berührungsereignis bewirkt werden.

6. Verfahren nach Anspruch 1, wobei die vibroakustischen Daten akustische Daten einschließen, die durch das physische Berührungsereignis bewirkt werden.

7. Verfahren nach Anspruch 1, wobei der Schritt des Bestimmens eines Berührungstyps umfasst:
Extrahieren von Merkmalen aus den Berührungsdaten und vibroakustischen Daten; und
Klassifizieren der Merkmale, um einen Berührungstyp für das physische Berührungsereignis zu bestimmen.

8. Verfahren nach Anspruch 7, wobei die extrahierten Merkmale mindestens ein Merkmal basierend auf einem Ort, einer Form, Orientierung und/oder Größe des physischen Berührungsereignisses einschließen.

9. Verfahren nach Anspruch 7, wobei die extrahierten Merkmale mindestens ein Merkmal basierend auf einem Hauptachsenwert, Nebenachsenwert, einer Exzentrizität und/oder einem Verhältnis von Haupt- und Nebenachsen des physischen Berührungsereignisses einschließen.

10. Verfahren nach Anspruch 7, wobei die extrahierten Merkmale mindestens ein Merkmal basierend auf einem Druck des physischen Berührungsereignisses einschließen.

11. Verfahren nach Anspruch 7, wobei die extrahierten Merkmale mindestens ein Merkmal basierend auf einer Kapazität des physischen Berührungsereignisses einschließen.

12. Verfahren nach Anspruch 7, wobei die extrahierten Merkmale mindestens ein Merkmal basierend auf einer Zeitdomänendarstellung der vibroakustischen Daten oder auf einer Ableitung der Zeitdomänendarstellung der vibroakustischen Daten einschließen.

13. Verfahren nach Anspruch 7, wobei die extrahierten Merkmale mindestens ein Merkmal basierend auf einer Frequenzdomänendarstellung der vibroakustischen Daten oder auf einer Ableitung der Frequenzdomänendarstellung der vibroakustischen Daten einschließen.

14. Verfahren nach Anspruch 7, wobei die extrahierten Merkmale mindestens ein Merkmal basierend auf Leistungen in unterschiedlichen Bändern einer Frequenzdomänendarstellung der vibroakustischen Daten oder auf einer Ableitung der Frequenzdomänendarstellung der vibroakustischen Daten einschließen.

15. Verfahren nach Anspruch 7, wobei die extrahierten Merkmale mindestens ein Merkmal basierend auf einem Verhältnis von Leistungen in unterschiedlichen Bändern einer Frequenzdomänendarstellung der vibroakustischen Daten oder auf einer Ableitung der Frequenzdomänendarstellung der vibroakustischen Daten einschließen.

16. Verfahren nach Anspruch 7, wobei die extrahierten Merkmale mindestens ein Merkmal basierend auf einem statistischen Wert der vibroakustischen Daten einschließen.

17. Verfahren nach Anspruch 7, wobei die extrahierten Merkmale mindestens ein Merkmal basierend auf mindestens einem der folgenden für die vibroakustischen Daten einschließt: Schiefheit, Dispersion, quadratisches Mittel, Nulldurchgang, Leistungssumme, Bereich, Durchschnittswert, Massenzentrum und Standardabweichung.

18. Verfahren nach Anspruch 7, wobei der Schritt des Klassifizierens der Merkmale Verwenden von Support Vector Machine, neuronalem Netzwerk, Entscheidungsbaum oder Random Forest einschließt, um die Merkmale zu klassifizieren.

19. Verfahren nach Anspruch 1, des Weiteren umfassend: Ausführen einer Aktion auf der elektronischen Vorrichtung (100) in Reaktion auf das physische Berührungsereignis und den Berührungstyp, wobei dasselbe physische Berührungsereignis zur Ausführung einer ersten Aktion für einen ersten Berührungstyp führt und zur Ausführung einer zweiten Aktion für einen zweiten Berührungstyp führt.

20. Verfahren nach Anspruch 1, wobei die berührungsempfindliche Oberfläche (110) ein Touchscreen ist.

21. Maschinenlesbares dingliches Speichermedium, auf dem Daten gespeichert sind, die Abfolgen von Anweisungen repräsentieren, die bei Ausführung durch eine elektronische Vorrichtung (100) mit einer berührungsempfindlichen Oberfläche (110), die Näherung vor dem tatsächlichen Kontakt detektieren kann, Berührungssensorschaltkreis(en) (112A) und vibroakustischen Sensorschaltkreis(en) (112B) bewirken, dass die elektronische Vorrichtung (100) ein Verfahren durchführt, welches die Schritte umfasst:
Empfangen eines Berührungsereignisauslösers (212), der durch die Berührungssensorschaltkreis(e) (112A) produziert wird, wobei der Berührungsereignisauslöser (212) ein Auftreten eines physischen Berührungsereignisses auf der berührungsempfindlichen Oberfläche (110) angibt;
Zugreifen auf Berührungsdaten, die in dem/den Berührungssensorschaltkreis(en) (112A) durch das physische Berührungsereignis produziert werden;
Zugreifen auf vibroakustische Daten für ein Zeitfenster, wobei die vibroakustischen Daten physisch in dem/den vibroakustischen Sensorschaltkreis(en) (112B) durch das physische Berührungsereignis produziert werden, wobei das Zeitfenster zu einer Zeit beginnt, die vor dem Empfang des Berührungsereignisauslösers (212) liegt; und
Bestimmen eines Berührungstyps für das physische Berührungsereignis basierend auf den Berührungsdaten und vibroakustischen Daten,
**dadurch gekennzeichnet, dass**
der Schritt des Zugreifens auf vibroakustische Daten für ein Zeitfenster umfasst:
Prognostizieren einer möglichen physischen Berührung vor dem Auftreten der physischen Berührung basierend auf Daten von Berührungssensorschaltkreis(en) (112A) in Zusammenhang mit der berührungsempfindlichen Oberfläche (110), wobei die Berührungsdaten angeben, dass ein Finger oder Instrument sich der berührungsempfindlichen Oberfläche (110) nähert; und
Verwenden einer solchen Prognose, um mit dem Erfassen vibroakustischer Daten in Zusammenhang mit der berührungsempfindlichen Oberfläche (110) zu beginnen, wobei die vibroakustischen Daten durch einen Puffer (310) gepuffert werden.

22. Elektronische Vorrichtung (100), umfassend:
eine berührungsempfindliche Oberfläche (110), die Näherung vor dem tatsächlichen Kontakt detektieren kann, berührungsempfindliche Sensorschaltkreis(e) (112A) und vibroakustische Sensorschaltkreis(e) (112B) ;
Mittel zum Empfangen eines Berührungsereignisauslösers (212), der durch die Berührungssensorschaltkreis(e) (112A) produziert wird, wobei der Berührungsereignisauslöser (212) ein Auftreten eines physischen Berührungsereignisses auf der berührungsempfindlichen Oberfläche (110) angibt;
Mittel zum Zugreifen auf Berührungsdaten, die in dem/den Berührungssensorschaltkreis(en) (112A) durch das physische Berührungsereignis produziert werden;
Mittel zum Zugreifen auf vibroakustische Daten für ein Zeitfenster, wobei die vibroakustischen Daten physisch in dem/den vibroakustischen Sensorschaltkreis(en) (112B) durch das physische Berührungsereignis produziert werden, wobei das Zeitfenster zu einer Zeit beginnt, die vor dem Empfang des Berührungsereignisauslösers (212) liegt; und
Mittel zum Bestimmen eines Berührungstyps für das physische Berührungsereignis basierend auf den Berührungsdaten und vibroakustischen Daten,
**dadurch gekennzeichnet, dass**
das Mittel zum Zugreifen auf vibroakustische Daten für ein Zeitfenster ausgestaltet ist zum:
Prognostizieren einer möglichen physischen Berührung vor dem Auftreten der physischen Berührung basierend auf Daten von Berührungssensorschaltkreis(en) (112A) in Zusammenhang mit der berührungsempfindlichen Oberfläche (110), wobei die Berührungsdaten angeben, dass ein Finger oder Instrument sich der berührungsempfindlichen Oberfläche (110) nähert; und
Verwenden einer solchen Prognose, um mit dem Erfassen vibroakustischer Daten in Zusammenhang mit der berührungsempfindlichen Oberfläche (110) zu beginnen, wobei die vibroakustischen Daten durch einen Puffer (310) gepuffert werden.

## Revendications

1. Procédé d'interaction entre un utilisateur et un dispositif électronique (100) comportant une surface sensible au toucher (110) qui est susceptible de détecter une proximité avant un contact réel, un montage de circuits de détection tactile (112A) et un montage de circuits de détection vibroacoustique (112B), le procédé comprenant :
la réception d'un déclencheur d'événement tactile (212) produit par le montage de circuits de détection tactile (112A), lequel déclencheur d'événement tactile (212) indique une occurrence d'un événement tactile physique sur la surface sensible au toucher (110) ;
l'accès à des données tactiles produites dans le montage de circuits de détection tactile (112A) par l'événement tactile physique ;
l'accès à des données vibroacoustiques pour un signal vibroacoustique produit dans le montage de circuits de détection vibroacoustique (112B) par l'événement tactile physique, pendant une fenêtre temporelle qui commence à un moment qui est antérieur à la réception du déclencheur d'événement tactile (212) ; et
la détermination d'un type de toucher pour l'événement tactile physique sur la base des données tactiles et des données vibroacoustiques,
**caractérisé en ce que** l'étape d'accès aux données vibroacoustiques pendant une fenêtre temporelle comprend :
la prédiction d'un contact physique possible avant l'apparition du contact physique, sur la base de données provenant d'un montage de circuits de détection tactile (112A) associés à la surface sensible au toucher (110), dans lequel lesdites données tactiles font état d'un doigt ou d'un instrument s'approchant de la surface sensible au toucher (110) ; et
l'utilisation d'une telle prédiction pour commencer la capture de données vibroacoustiques associées à la surface sensible au toucher (110), les données vibroacoustiques étant mises en mémoire tampon par une mémoire tampon (310).

2. Procédé selon la revendication 1 et comprenant en outre la prédiction, sur la base de la proximité détectée par la surface sensible au toucher (110), du moment où un contact réel se produira.

3. Procédé selon la revendication 1 dans lequel un retard dans la réception du déclencheur d'événement tactile (212) est d'au moins une milliseconde après l'occurrence de l'événement tactile physique.

4. Procédé selon la revendication 1 dans lequel une attente est utilisée de telle sorte que la fenêtre temporelle se termine à un moment qui est après la réception du déclencheur d'événement tactile (212).

5. Procédé selon la revendication 1 dans lequel les données vibroacoustiques comprennent des données de vibration provoquées par l'événement tactile physique.

6. Procédé selon la revendication 1 dans lequel les données vibroacoustiques comprennent des données acoustiques provoquées par l'événement tactile physique.

7. Procédé selon la revendication 1 dans lequel l'étape de détermination d'un type de toucher comprend :
l'extraction de caractéristiques à partir des données tactiles et des données vibroacoustiques ; et
le classement des caractéristiques pour déterminer un type de toucher pour l'événement de contact physique.

8. Procédé selon la revendication 7 dans lequel les caractéristiques extraites comprennent au moins une caractéristique basée sur un emplacement, une forme, une orientation et/ou une taille de l'événement tactile physique.

9. Procédé selon la revendication 7 dans lequel les caractéristiques extraites comprennent au moins une caractéristique basée sur une valeur de grand axe, une valeur de petit axe, une excentricité et/ou un rapport de grand axe et petit axe de l'événement de contact physique.

10. Procédé selon la revendication 7 dans lequel les caractéristiques extraites comprennent au moins une caractéristique basée sur une pression de l'événement de contact physique.

11. Procédé selon la revendication 7 dans lequel les caractéristiques extraites comprennent au moins une caractéristique basée sur une capacité de l'événement de contact physique.

12. Procédé selon la revendication 7 dans lequel les caractéristiques extraites comprennent au moins une caractéristique basée sur une représentation du domaine temporel des données vibroacoustiques ou sur une dérivée de la représentation du domaine temporel des données vibroacoustiques.

13. Procédé selon la revendication 7 dans lequel les caractéristiques extraites comprennent au moins une caractéristique basée sur une représentation de domaine fréquentiel des données vibroacoustiques ou sur une dérivée d'une représentation de domaine fréquentiel des données vibroacoustiques.

14. Procédé selon la revendication 7 dans lequel les caractéristiques extraites comprennent au moins une caractéristique basée sur les puissances dans différentes bandes d'une représentation de domaine fréquentiel des données vibroacoustiques ou d'une dérivée d'une représentation de domaine fréquentiel des données vibroacoustiques.

15. Procédé selon la revendication 7 dans lequel les caractéristiques extraites comprennent au moins une caractéristique basée sur un rapport de puissances dans différentes bandes d'une représentation de domaine fréquentiel des données vibroacoustiques ou d'une dérivée d'une représentation de domaine fréquentiel des données vibroacoustiques.

16. Procédé selon la revendication 7 dans lequel les caractéristiques extraites comprennent au moins une caractéristique basée sur une valeur statistique des données vibroacoustiques.

17. Procédé selon la revendication 7 dans lequel les caractéristiques extraites comprennent au moins une caractéristique basée sur au moins un des éléments suivants pour les données vibroacoustiques : une asymétrie, une dispersion, une moyenne quadratique, un passage par zéro, une somme de puissances, une plage, une valeur moyenne, un centre de masse et un écart type.

18. Procédé selon la revendication 7 dans lequel l'étape de classification des caractéristiques comprend l'utilisation d'une machine vectorielle de support, d'un réseau neuronal, d'un arbre de décision ou d'une forêt aléatoire pour classer les caractéristiques.

19. Procédé selon la revendication 1 comprenant en outre :
l'exécution d'une action sur le dispositif électronique (100) en réponse à l'événement tactile physique et au type de toucher, dans lequel le même événement tactile physique entraîne l'exécution d'une première action pour un premier type de toucher et entraîne l'exécution d'une seconde action pour un second type de toucher.

20. Procédé selon la revendication 1 dans lequel la surface sensible au toucher (110) est un écran tactile.

21. Support d'enregistrement tangible lisible par machine sur lequel sont stockées des données représentant des séquences d'instructions qui, lorsqu'elles sont exécutées par un dispositif électronique (100) ayant une surface sensible au toucher (110) qui est susceptible de détecter une proximité avant un contact réel, un montage de circuits de détection tactile (112A) et un montage de circuits de détection vibroacoustique (112B), amènent le dispositif électronique (100) à réaliser un procédé comprenant les étapes suivantes :
la réception d'un déclencheur d'événement tactile (212) produit par le montage de circuits de détection tactile (112A), lequel déclencheur d'événement tactile (212) fait état d'une occurrence d'un événement tactile physique sur la surface sensible au toucher (110) ;
l'accès à des données tactiles produites dans le montage de circuits de détection tactile (112A) par l'événement tactile physique ;
l'accès à des données vibroacoustiques pendant une fenêtre temporelle, les données vibroacoustiques étant physiquement produites dans les circuits de détection vibroacoustique (112B) par l'événement tactile physique, la fenêtre temporelle commençant à un moment qui est antérieur à la réception du déclencheur d'événement tactile (212) ; et
la détermination d'un type de toucher pour l'événement tactile physique sur la base des données tactiles et des données vibroacoustiques,
**caractérisé en ce que** l'étape d'accès aux données vibroacoustiques pendant une fenêtre temporelle comprend :
la prédiction d'un contact physique possible, avant l'occurrence du contact physique, sur la base de données provenant d'un montage de circuits de détection tactile (112A) associé à la surface sensible au toucher (110), dans lequel lesdites données tactiles font état d'un doigt ou d'un instrument s'approchant de la surface sensible au toucher (110) ; et
l'utilisation d'une telle prédiction pour commencer la capture de données vibroacoustiques associées à la surface sensible au toucher (110), les données vibroacoustiques étant mises en mémoire tampon par un mémoire tampon (310).

22. Dispositif électronique (100) comprenant :
une surface sensible au toucher (110) qui est susceptible de détecter une proximité avant un contact réel, un montage de circuits de détection tactile (112A) et un montage de circuits de détection vibroacoustique (112B) ;
des moyens pour recevoir un déclencheur d'événement tactile (212) produit par le montage de circuits de détection tactile (112A), lequel déclencheur d'événement tactile (212) indique une occurrence d'un événement tactile physique sur la surface sensible au toucher (110) ;
des moyens pour accéder à des données tactiles produites dans le montage de circuits de détection tactile (112A) par l'événement tactile physique ;
des moyens pour accéder à des données vibroacoustiques pour une fenêtre temporelle, les données vibroacoustiques étant physiquement produites dans le montage de circuits de détection vibroacoustique (112B) par l'événement de contact physique, la fenêtre temporelle commençant à un moment qui est antérieur à la réception du déclencheur d'événement tactile (212) ; et
des moyens pour déterminer un type de contact pour l'événement tactile physique sur la base des données tactiles et des données vibroacoustiques,
**caractérisé en ce que** les moyens pour accéder aux données vibroacoustiques pendant une fenêtre temporelle sont configurés pour :
prédire un contact physique possible, avant l'occurrence du contact physique, sur la base de données provenant d'un montage de circuits de détection tactile (112A) associé à la surface sensible au toucher (110), dans lequel lesdites données tactiles font état d'un doigt ou d'un instrument s'approchant de la surface sensible au toucher (110) ; et
utiliser une telle prédiction pour commencer la capture de données vibroacoustiques associées à la surface sensible au toucher (110), les données vibroacoustiques étant mises en mémoire tampon par une mémoire tampon (310).
